(19) Europäisches Patentamt
European Patent Office
Office européen des brevets

(11) EP 4 456 365 A1

(12) EUROPEAN PATENT APPLICATION

(43) Date of publication:
30.10.2024 Bulletin 2024/44

(21) Application number: 23170799.3

(22) Date of filing: 28.04.2023

(51) International Patent Classification (IPC):
H02J 3/00 (2006.01)    G06Q 50/06 (2024.01)
G05B 13/02 (2006.01)    G06N 20/00 (2019.01)

(52) Cooperative Patent Classification (CPC):
H02J 3/003; G06N 20/00; G06Q 10/04;
G06Q 10/087; G06Q 30/0202; G06Q 50/06;
H02J 3/004; H02J 2203/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Robert Bosch GmbH
70442 Stuttgart (DE)

(72) Inventors:
• Di Castro, Dotan
  3440619 Haifa (IL)
• Kosman, Eitan
  Haifa (IL)
• Koren, Noam
  3508409 Haifa (IL)

Remarks:
Amended claims in accordance with Rule 137(2) EPC.

(54) **PREDICTING SUPPLY AND/OR DEMAND OF PHYSICAL COMMODITIES IN A DISTRIBUTION NETWORK**

(57)    A method (200) for training a machine learning model (3) for predicting the supply and/or demand (2) of a physical commodity in a distribution network (1) comprising a plurality of nodes (10-16) in a hierarchy of multiple levels (1a-1e), wherein nodes (10-16) on adjacent levels (1a-1e) of the hierarchy have coherency relationships in that the supply and/or demand at a node (10-16) on the higher level (1a-1d) is the aggregate of the supply and/or demand at multiple nodes (10-16) on the lower level (1b-1e), the method comprising the steps of:
• providing (210), for each node (10-16) in the distribution network (1), a time series (20-26) of supply and/or demand values for a plurality of past time steps;
• splitting (220) the time series (20-26) into a training part (20a-26a) and a test part (20b-26b);
• providing (230) the training part (20a-26a) of each time series (20-26) to the machine learning model (3), thereby obtaining predicted supply and/or demand values (40-46) for time steps that relate to the test part (20b-26b);
• rating (240), by means of a predetermined loss function (6),
∘ deviations of the predicted supply and/or demand values (40-46) from the supply and/or demand values (20-26) in the test part (20b-26b), and
∘ how well, in view of the predicted supply and/or demand values (40-46), the coherency relationships between nodes are met with respect to the time steps that relate to the test part (20b-26b); and
• optimizing (250) parameters (3a) that characterize the behavior of the machine learning model (3) towards the goal that a further processing of training parts improves the rating (6a) by the loss function (6).

Fig. 4

## Description

The present invention relates to the predicting of the flow of physical commodities through a distribution network. Such predictions can serve to optimize the layout, and/or the operation, of the distribution network.

Background

Distribution networks for many commodities are organized in a hierarchy of multiple levels that are linked with coherency relationship. In a simple example, an electricity grid may distribute electricity to a number of connected cities, and each city may distribute the electricity onward to different districts. Each districts may then distribute the electricity to its streets, and each street serves a plurality of consumers. In the absence of local electricity sources (such as solar panels on homes), there are coherency relationships of the kind that the consumption in a street is the sum of consumptions of the consumers in this street, the consumption in a district is the sum of consumptions in all streets of this district, the consumption of a city is the sum of consumptions in all districts of this city, and the total consumption in the grid is the sum of consumption in all cities.

It is desirable to predict, based on past data (e.g., consumption) gathered at the individual nodes (cities, districts, streets, consumers), the behavior of the distribution network as a whole. This facilitates a monitoring whether the network is operating correctly or whether the design and/or the operation of the network needs to be changed.

Disclosure of the invention

The invention provides a method for predicting the supply, and/or the demand, of a physical commodity in a distribution network. This distribution network comprises a plurality of nodes in a hierarchy of multiple levels. Nodes on adjacent levels of the hierarchy have coherency relationships in that the supply and/or demand at a node on the higher level is the aggregate of the supply and/or demand at multiple nodes on the lower level. The supply and/or demand may be measured in any suitable quantity, such as a flow (e.g., a mass flow, a volumetric flow or a flow of discrete units), a wattage or an amperage.

In the course of the method, at least one machine learning model is provided. This machine learning model is trained to take a time series of supply and/or demand values at one node for a plurality of past time steps as input, and produce a supply and/or demand value for at least one future time step at this node. For each node, a respective past time series of supply and/or demand values is provided to the at least one machine learning model. In this manner, at least one respective future supply and/or demand value is predicted for each node in the distribution network.

This method requires only the very generic basic assumption that the behavior reflected in the time series is governed by a mechanism that need not be known or specified explicitly, but that consistently stays the same. That is, the presence of such a mechanism allows a machine learning model to generalize over the limited set of examples on which it was trained. If a consistent mechanism is in force, a machine learning model can capture it. What a machine learning model cannot capture is a completely unpredictable event that steers the dynamics of the time series into a new direction. One example is the sudden dwindling of commuter traffic to only a tiny fraction of its usual volume due to the outbreak of a pandemic and the handing down of "stay at home" orders.

It has been found that, even though the machine learning model makes a prediction for the future development of individual supply and/or demand time series, it may be trained such that the time series for all nodes in the distribution network also fulfil the coherency relationship. That is, only one forward pass through the machine learning model is necessary to obtain a prediction and at the same time ensure that this prediction is coherent. This in turn ensures that the prediction is realistic. For many kinds of commodities, the coherency relationship is motivated by fundamental physical laws. In the example of the electrical grid, the coherency relationships are dictated by the law of conservation of energy. Similarly, in the example of a liquid (such as water), the fact that the liquid is basically incompressible dictates the coherency relationships. Thus, if the prediction for the behavior of the distribution network as a whole fails to obey the coherency relationships, it can be no longer considered to be realistic.

Also, the power of machine learning models to generalize causes the method to tolerate larger changes to the dynamics of the investigated distribution network than other numerical optimization methods. These numerical optimization methods tend to be tied more tightly to specific assumptions. If the assumptions are no longer fulfilled, the optimization needs to be redone.

In a particularly advantageous embodiment, based at least in part on the predicted supply and/or demand values, a figure of merit for operation of the distribution network is evaluated. For example, such a figure of merit may measure whether the distribution network can satisfy the demand of all customers at the bottom of the hierarchy or whether any customer suffers a shortage of the physical commodity.

In a further particularly advantageous embodiment, the figure of merit is based at least in part on whether the physical links between nodes can support the traffic of the physical commodity that corresponds to the supply and/or demand values at all nodes. In this manner, it can be determined whether there are any bottlenecks in the network. If bottlenecks are identified, any appropriate remedial action may be taken to alleviate or eliminate them.

Thus, in a further particularly advantageous embodiment, the method further comprises: optimizing the hierarchy, and/or operating parameters, and/or an operating schedule, of the distribution network with the goal of improving the figure of merit. For example, the hierarchy of the distribution network may be amended to augment the capacity of a physical link between two particular nodes, or to create an additional link. Also, in order to provide an alternative path through the distribution network between two particular nodes and increase transport capacity between these two nodes, new nodes may be added to the hierarchy. Alternatively or in combination to this, operating parameters, and/or an operating schedule, of the distribution network may be modified. For example, in a setup of parallel pumps for conveying a liquid through a pipe between two nodes, the number of running pumps may be increased in order to provide a higher flow or pressure. In an electricity grid, interruptible loads in congested network areas may be temporarily shed to free up capacity for serving more pressing needs.

In another prominent example, the physical commodity comprises traffic participants in a road network as the distribution network. Such a road network has a hierarchy with coherency relationships as well. The nodes in the hierarchy correspond to junctions in the road network. A schedule for one or more traffic lights is optimized as the operating schedule. In this example, it is not possible to grant a smooth and uninterrupted passage through the road network to all traffic participants at the same time. Rather, if one traffic participant can pass the traffic light, another one has to wait.

As discussed before, the physical commodity may comprise a liquid or electricity. But the same also applies for solids, e.g., in the form of grains or pellets, as well. They are incompressible just as well.

The invention also provides a method for training a machine learning model for use in the method described above.

In the course of this method, for each node in the distribution network, a time series of supply and/or demand values for a plurality of past time steps. This time series is split into an earlier training part and a later test part. That is, the machine learning model is trained to take in the training part as input and predict the test part.

To this end, the training part of each time series is provided as input to the machine learning model. From this input, the machine learning model produces predicted supply and/or demand values for time steps that relate to the test part.

These predicted supply and/or demand values can then be compared to the actual known supply and/or demand values to obtain feedback for the optimization of the machine learning model.

Specifically, a predetermined loss function rates

- deviations of the predicted supply and/or demand values from the supply and/or demand values in the test part, as well as
- how well, in view of the predicted supply and/or demand values, the coherency relationships between nodes are met with respect to the time steps that relate to the test part.

In particular, a deviation from the supply and/or demand values in the test part may form a first contribution to the loss function, and a violation of the coherency relationships may form a second contribution to the loss function. The loss function may then weight these two contributions relatively to one another.

In a particularly advantageous embodiment, in order to determine how well the coherency relationships are met, aggregated values are determined according to the coherency relationships. These aggregated values are then compared to predicted supply and/or demand values for the respective nodes. In particular, this aggregating may be performed over at least one predetermined number of k hops in the hierarchy.

For k = 1, such an aggregation mainly measures the ability of the machine learning model to generalize in terms of coherency. That is, it is measured how well the machine learning model can be expected to realize coherency when given an unseen time series. For larger k, coherency is measured over larger parts of the multi-level hierarchical time series tree, or even over the whole tree. Furthermore, this normalizes the numeric values, so that aggregated values are comparable across different datasets.

For example, let the distribution network be described as a hierarchical time series tree $T = (V, E)$ with $h$ levels. $V$ represents the set of nodes, where each node $v \in V$ represents a time series of a supply and/or demand value at the respective node. $E$ represents the set of directed edges between nodes, where an edge $v \rightarrow v'$ indicates the coherency relationship that $v$ is aggregated from $v'$. The predicted state $\hat{T} = (\hat{V}, E)$ of the tree $T$ at the next time step comprises the same set $E$ of edges, but predictions $\hat{V}$ for the supply and/or demand values at the next time step.

Then, the loss component $L_d$ for the deviation of the prediction $\hat{V}$ from the actual values V for the time steps that relate to the test part may, for example, be measured by means of the mean squared error

$$L_d = \left\| V - \hat{V} \right\|_2^2.$$

Herein and in the following, time indices are omitted for better readability.

An aggregated $k$-hop prediction $\hat{V}_{agg,k}$ may then be computed such that, for every $v \in \hat{V}$, there is a $u \in \hat{V}_{agg,k}$ with $u = \Sigma_{v \to v' \in E}^k \hat{v}'$. That is, for every $v$, all $v'$ from where there is a route of length $k$ to $v$ are summed. With this aggregated $k$-hop prediction $\hat{V}_{agg,k}$, a root mean squared error

$$\left\| \hat{V} - \hat{V}_{agg,k} \right\|_2$$

may be computed. A weighted average of this $k$-hop root mean squared error may be calculated for each $k \in [1,h]$ to form a loss contribution $L_c$ for violation of the coherency constraints:

$$L_c = \sum_{k=1}^{h} w_k \left\| \hat{V} - \hat{V}_{agg,k} \right\|_2.$$

Herein, the $w_k$ are learnable parameters, with $\{w_k \geq 0\}_{\forall k}$ and $\Sigma_k w_k = 1$. The expression for $L_c$ can be understood to be a linear model with a vector r containing the values $\| \hat{V} - \hat{V}_{agg,k}\|_2$ and a weights vector $w$ containing the values $w_k$. $L_c$ can then be understood to be a dot product between vectors $w$ and $r$. Herein, the vector w should be normalized in order to avoid a trivial solution $w = 0$. Thus, an example for a full loss function $L$ for the training of the machine learning model is

$$L = L_d + L_c = \left\| V - \hat{V} \right\|_2^2 + \lambda \sum_{k=1}^{h} w_k \left\| \hat{V} - \hat{V}_{agg,k} \right\|_2.$$

That is, in a further advantageous embodiment, the aggregating is performed for multiple numbers $k$, and a weighted average of the respective results of the aggregating is computed. In particular, using the weighted average, inherent differences in the magnitudes of contributions for different hop numbers $k$ may be levelled.

The parameter $\lambda$ provides for a relative weighting between the goal of a low root mean squared error and the goal of coherency between predictors that are trained to predict different levels of the tree. In general, perfect predictors would also indirectly optimize the coherency (as the ground truth are always fully coherent) but this wouldn't apply in the opposite direction, i.e. optimizing coherency wouldn't improve accuracy (for example, a set of predictors that predict 0 constantly would score best in terms of coherency). However, in order to avoid a trivial solution where the optimization is focused on specific parts of the tree (for example, the tree root where the values are usually very smooth due their less noisy nature) the coherency strives to force the optimization to capture the whole context of the problem, and force focus the optimization on the finer details too.

In particular, the weights $w_k$ for the average may be optimized together with the parameters of the machine learning model. For example, the vector of the parameters may be expanded with more components relating to the weights $w_k$. For example, if the machine learning model comprises a neural network, the parameters that characterize its behavior are of a similar kind, namely weights with which inputs to neurons are summed to an activation of the respective neuron.

In a further particularly advantageous embodiment, when splitting the time series into a training part and a test part, a validation part is split off as well. Using the validation part, the performance of the trained machine learning model is rated based on at least one performance metric. In this manner, it can be measured whether the machine learning model merely "memorized" the knowledge in the training dataset, or whether it has actually learned from this training dataset with a power to generalize to unseen situations.

One example of a performance metric is a deviation of predicted supply and/or demand values from values in the validation part. For example, a root mean squared error

$$\left\| V - \hat{V} \right\|_2$$

may be used. This measures the ability of the machine learning model to determine a sought quantity, such as a consumption of the physical commodity (e.g., electricity).

Another example of a performance metric is a 1-hop coherency of the form

$$1 - \frac{\left\|\hat{V} - \hat{V}_{agg,1}\right\|_2}{\left\|\hat{V}\right\|_2}.$$

This performance metric evaluates the ability of the trained machine learning network to generalize. As discussed before, it is measured how well the machine learning model can be expected to realize coherency when given an unseen time series.

Another example of a performance metric is an aggregation coherency of the form

$$1 - \frac{\left\|\hat{V} - \hat{V}_{agg,h}\right\|_2}{\left\|\hat{V}\right\|_2}.$$

As discussed before, this metric estimates the coherency over the whole tree, and also normalized values, such that they are comparable across datasets.

Another example of a performance metric is an accuracy of predicted supply and/or demand values of the form

$$1 - \frac{\left\|V - \hat{V}\right\|_2}{\left\|\hat{V}\right\|_2}.$$

This is basically a normalized root mean square error.

Another example of a performance metric is a coefficient of determination of predicted supply and/or demand values of the form

$$R^2 = 1 - \frac{\left\|V - \hat{V}\right\|_2^2}{\left\|V - \bar{V}\right\|_2^2}.$$

This is a notion of the accuracy that is even more independent from the magnitude of elements in the dataset. It is therefore better suited to compare the performance metric across datasets.

The methods may be wholly or partially computer-implemented and embodied in software. The invention therefore also relates to a computer program with machine-readable instructions that, when executed by one or more computers and/or compute instances, cause the one or more computers and/or compute instances to perform a method. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

The Figures show:

Figure 1 Exemplary embodiment of the method 100 for predicting the supply, and/or the demand, of a physical commodity in a distribution network;

Figure 2 Illustration of the prediction $\hat{T}$ of the tree state for a future time step $t_1$ based on the tree state T for a past time step $t_0$;

Figure 3 Exemplary embodiment of the method 200 for training a machine learning model for use in the method 100.

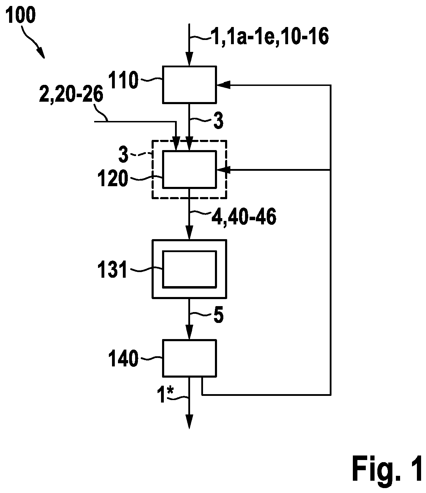

Figure 1 is a schematic flow chart of an embodiment of the method 100 for predicting the supply and/or demand 2 of a physical commodity in a distribution network 1. The distribution network 1 comprises a plurality of nodes (10-16) in a hierarchy of multiple levels 1a-1e. This hierarchy is governed by coherency relationships between nodes 10-10 on adjacent levels 1a-1e of the hierarchy: The supply and/or demand at a node 10-16 on the higher level 1a-1d is the aggregate of the supply and/or demand at multiple nodes 10-16 on the lower level 1b-1e.

In step 110, at least one machine learning model 3 is provided. This machine learning model 3 is trained to predict, based on a time series 2 of supply and/or demand values for a plurality of past time steps, a supply and/or demand value 4 for at least one future time step.

In step 120, for each node 10-16, a respective past time series 20-26 of supply and/or demand values is provided to the at least one machine learning model 3. The machine learning model 3 then predicts at least one respective future supply and/or demand value 40-46.

In step 130, based at least in part on the predicted supply and/or demand values 40-46, a figure of merit 5 for operation of the distribution network 1 is evaluated.

According to block 131, the figure of merit 5 may be based at least in part on whether the physical links E1-E6 between nodes 10-16 can support the traffic of the physical commodity that corresponds to the supply and/or demand values 20-26, 40-46 at all nodes 10-16.

In step 140, the hierarchy, and/or operating parameters, and/or an operating schedule, of the distribution network 1 are optimized with the goal of improving the figure of merit 5. Changes made in step 140 may be propagated to the determining of predictions according to step 120, but also to the providing of the machine learning model 3 according to step 110. That is, for larger changes, the machine learning model 3 may need to be adjusted and/or amended. The finally optimized state of the distribution network 1 is labelled with the reference sign 1*.

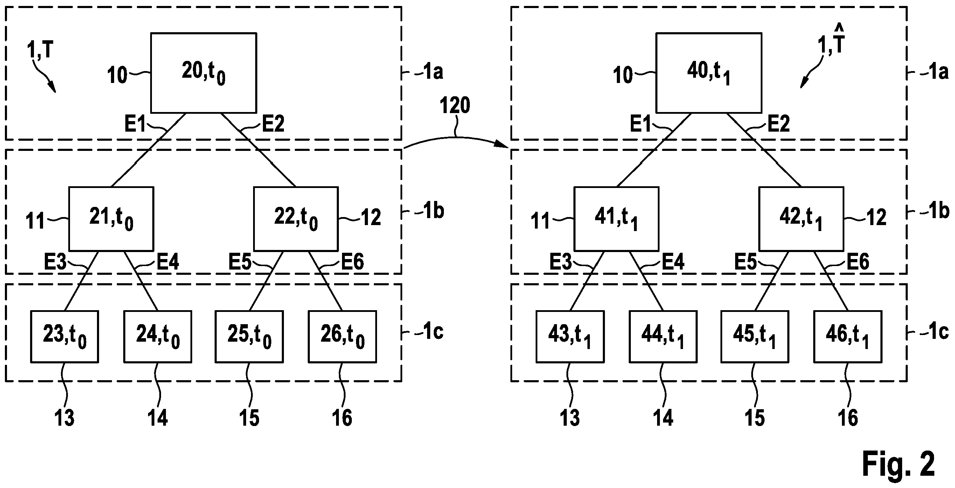

Figure 2 illustrates the obtaining of predictions according to step 120 of the method 100 described in Figure 1 on an exemplary distribution network 1 with seven nodes 10-16 that are connected by edges E1-E6. The distribution network 1 has three levels 1a-1c. The highest level 1a comprises only one single node 10. The middle level 1b comprises two nodes 11 and 12. The lowest level 1c comprises four nodes 13-16.

In the state $T$ at time step $t_0$, time series 20-26 of supply and/or demand values have accrued for the nodes 10-16.

Method step 120 generates a predicted state $\hat{T}$ of the distribution network 1 for the future time step $t_1$. For each of the time series 20 to 26, a respective new prediction value 40-46 for the future time step $t_1$ is generated independently. The edges E1-E6 are left unchanged.

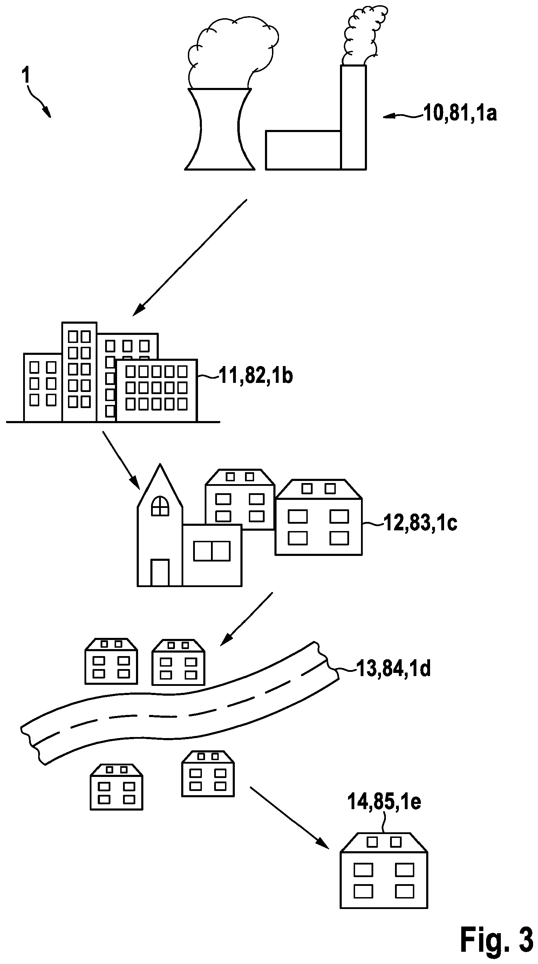

Figure 3 shows an exemplary distribution network 1 to which the method 100 may be applied. This distribution network 1 serves to distribute electricity and comprises five levels 1a to 1e. For simplicity, only one node on each level 1a-1e is shown in Figure 3.

On the top level 1a, at the node 10, a power station 81 or any other suitable energy source (such as an interconnection to another electricity grid) feeds the distribution network 1. The power station 81 is connected to multiple cities 82 on the next level 1b, only one of which is shown at node 11. The total power drawn from the power station 81 equals the sum of consumptions of all cities 82.

Within each city 82, on the next lower level 1c, electricity is distributed to multiple districts 83, only one of which is shown at node 12. The total consumption of the city 82 equals the sum of consumptions of all its districts 83.

Within each district 83, on the next lower level 1d, electricity is distributed to multiple streets 84, only one of which is shown at node 13. The total consumption of the district 83 equals the sum of consumptions of all of its streets 84.

Finally, within each street 84, on the lowest level 1e, electricity is distributed to multiple customers 85, only one of which is shown at node 14. The total consumption of the street 84 equals the sum of consumptions of all of its customers 85.

In fact, grid operators and utility companies monitor the compliance of the distribution network 1 with these coherency relationships in order to detect faulty metering equipment or manipulation, such as bypassing of manipulating the metering equipment. E.g., if the total consumption of the street is 50,000 kWh and customers in this street have paid only for 40,000 kWh, the remaining 10,000 kWh must have gone somewhere.

The division of the electricity distribution network 1 into levels shown in Figure 3 is only exemplary. There may be more or less levels, and some or all of these levels may represent different entities than in Figure 3.

For example, the electricity distribution network 1 may be a metropolitan charging network for electric vehicles. Starting from any suitable power source on the highest level 1a, this may serve one or more metropolitan regions on the next lower level 1b. Each metropolitan region may comprise one or more cities on the next lower level 1c. Within each city, there are likely to be several charging parks on the next lower level 1d. Each such charging park may comprise multiple charging points on the lowest level 1e.

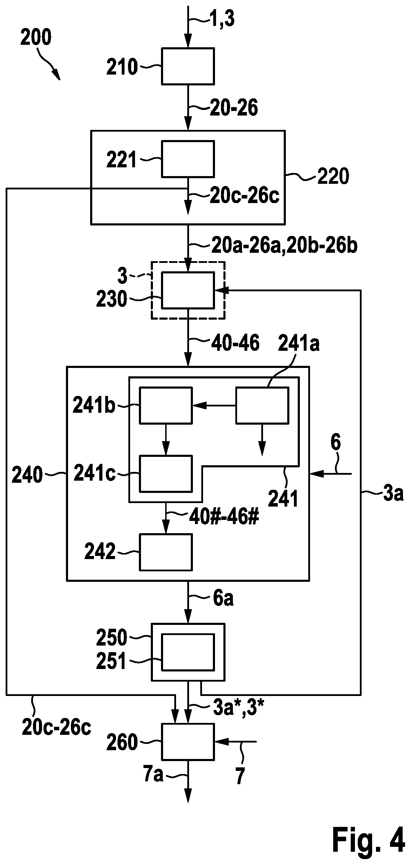

Figure 4 is a schematic flow chart of an exemplary embodiment of the method 200 for training a machine learning model 3 for use in the method 100 described above.

In step 210, for each node 10-16 in the distribution network 1, a time series 20-26 of supply and/or demand values for a plurality of past time steps is provided.

In step 220, the time series 20-26 is split into a training part 20a-26a and a test part 20b-26b. Optionally, according to block 221, a validation part 20c-26c may be split off as well.

In step 230, the training part 20a-26a of each time series 20-26 is provided to the machine learning model 3. In this manner, the machine learning model 3 obtains predicted supply and/or demand values 40-46 for time steps that relate to the test part 20b-26b of the time series 20-26.

In step 240, a predetermined loss function 6 rates

- deviations of the predicted supply and/or demand values 40-46 from the supply and/or demand values 20-26 in the test part 20b-26b, and ir also rates
- how well, in view of the predicted supply and/or demand values 40-46, the coherency relationships between nodes are met with respect to the time steps that relate to the test part 20b-26b.

The result is labelled with the reference sign 6a.

For example, as discussed before, the predetermined loss function 6 may comprise one contribution $L_d$ for the deviations and one contribution $L_c$ for violations of the coherency relationships.

According to block 241, to determine how well the coherency relationships are met, aggregated values 40#-46# may be determined from predicted supply and/or demand values 40-46. According to block 242, these aggregated values 40#-46# may then be compared to predicted supply and/or demand values 40-46 for the respective nodes 10-16. That is, at least for some nodes 10-16, predicted supply/demand values may be obtained in two manners:

- directly by prediction (as values 40-46) and
- indirectly by aggregating from predictions for lower levels, forming aggregated values 40#-46#.

If there is coherency, each aggregated value 40#-46# should match the directly predicted value 40-46 for the respective node 10-16.

In particular, according to block 241a, the aggregating may be performed over at least one predetermined number k of hops in the hierarchy.

According to block 241b, the aggregating may then be performed for multiple numbers k of hops. According to block 241c, a weighted average of the respective results of the aggregating may then be computed.

In step 250, parameters 3a that characterize the behavior of the machine learning model 3 are optimized towards the goal that a further processing of training parts improves the rating 6a by the loss function 6. The optimization may be terminated upon fulfilment of any suitable termination criterion, such as a number of epochs or the slowing down or disappearance of any further progress. The finally optimized state of the parameters 3a is labelled with the reference sign 3a*. These parameters 3a* define the finally trained state of the machine learning model 3*.

Optionally, in step 260, using a validation part 20c-26c split off in block 221, the performance 3b of the trained machine learning model 3* is rated (i.e., measured) based on at least one performance metric 7. The result is labelled with the reference sign 7a.

**Claims**

1. A method (200) for training a machine learning model (3) for predicting the supply and/or demand (2) of a physical commodity in a distribution network (1) comprising a plurality of nodes (10-16) in a hierarchy of multiple levels (1a-1e), wherein nodes (10-16) on adjacent levels (1a-1e) of the hierarchy have coherency relationships in that the supply and/or demand at a node (10-16) on the higher level (1a-1d) is the aggregate of the supply and/or demand at multiple nodes (10-16) on the lower level (1b-1e), the method comprising the steps of:

   - providing (210), for each node (10-16) in the distribution network (1), a time series (20-26) of supply and/or demand values for a plurality of past time steps;
   - splitting (220) the time series (20-26) into a training part (20a-26a) and a test part (20b-26b);
   - providing (230) the training part (20a-26a) of each time series (20-26) to the machine learning model (3), thereby obtaining predicted supply and/or demand values (40-46) for time steps that relate to the test part (20b-26b);

• rating (240), by means of a predetermined loss function (6),

  ◦ deviations of the predicted supply and/or demand values (40-46) from the supply and/or demand values (20-26) in the test part (20b-26b), and
  ◦ how well, in view of the predicted supply and/or demand values (40-46), the coherency relationships between nodes are met with respect to the time steps that relate to the test part (20b-26b); and

• optimizing (250) parameters (3a) that characterize the behavior of the machine learning model (3) towards the goal that a further processing of training parts improves the rating (6a) by the loss function (6).

2. The method (200) of claim 1, wherein the determining of how well the coherency relationships are met comprises:

• determining (241), from predicted supply and/or demand values (40-46), according to the coherency relationships, aggregated values (40#-46#); and
• comparing (242) these aggregated values (40#-46#) to predicted supply and/or demand values (40-46) for the respective nodes (10-16).

3. The method (200) of claim 2, wherein the aggregating is performed (241a) over at least one predetermined number k of hops in the hierarchy.

4. The method (200) of claim 3, wherein

• the aggregating is performed (241b) for multiple numbers k of hops; and
• a weighted average of the respective results of the aggregating is computed (241c).

5. The method (200) of claim 4, wherein the weights for the average are optimized (251) together with the parameters (3a) of the machine learning model.

6. The method (200) of any one of claims 1 to 5, further comprising:

• when splitting (220) the time series, splitting off (221) a validation part (20c-26c) as well; and
• rating (260), using the validation part (20c-26c), the performance (3b) of the trained machine learning model (3*) based on at least one performance metric (7).

7. The method (200) of claim 6, wherein the performance metric comprises one or more of:

• a deviation of predicted supply and/or demand values (40-46) from values (20-26) in the validation part (20c-26c);
• a measure for the meeting of the coherency relationships over one or more hops in the hierarchy;
• an accuracy of predicted supply and/or demand values (40-46); and
• a coefficient of determination of predicted supply and/or demand values (40-46).

8. A method (100) for predicting the supply and/or demand (2) of a physical commodity in a distribution network (1) comprising a plurality of nodes (10-16) in a hierarchy of multiple levels (1a-1e), wherein nodes (10-16) on adjacent levels (1a-1e) of the hierarchy have coherency relationships in that the supply and/or demand at a node (10-16) on the higher level (1a-1d) is the aggregate of the supply and/or demand at multiple nodes (10-16) on the lower level (1b-1e), the method (100) comprising the steps of:

• providing (110) at least one machine learning model (3) that is trained to predict, based on a time series (2) of supply and/or demand values for a plurality of past time steps, a supply and/or demand value (4) for at least one future time step; and
• for each node (10-16), providing (120) a respective past time series (20-26) of supply and/or demand values to the at least one machine learning model (3), thereby predicting at least one respective future supply and/or demand value (40-46).

9. The method (100) of claim 8, further comprising: evaluating (130), based at least in part on the predicted supply and/or demand values (40-46), a figure of merit (5) for operation of the distribution network (1).

10. The method (100) of claim 9, wherein the figure of merit (5) is based (131) at least in part on whether the physical links (E1-E6) between nodes (10-16) can support the traffic of the physical commodity that corresponds to the supply and/or demand values (20-26, 40-46) at all nodes (10-16).

11. The method (100) of any one of claims 9 to 10, further comprising: optimizing (140) the hierarchy, and/or operating parameters, and/or an operating schedule, of the distribution network (1) with the goal of improving the figure of merit (5).

12. The method (100) of claim 11, wherein

   • the physical commodity comprises traffic participants in a road network;
   • the nodes (10-16) correspond to junctions in the road network; and
   • a schedule for one or more traffic lights is optimized as the operating schedule.

13. The method (100) of any one of claims 8 to 11, wherein the physical commodity comprises one or more of: a solid, a liquid, and electricity.

14. A computer program, comprising machine-readable instructions that, when executed by one or more computers and/or compute instances, cause the one or more computers and/or compute instances to perform a method (100, 200) of any one of claims 1 to 13.

15. A non-transitory machine-readable data carrier and/or a download product with the computer program of claim 14.

16. One or more computers and/or compute instances with the computer program of claim 14, and/or with the machine-readable data carrier and/or download product of claim 15.


**Amended claims in accordance with Rule 137(2) EPC.**

1. A method (200) for training a machine learning model (3) for predicting the supply and/or demand (2) of a physical commodity in a distribution network (1) comprising a plurality of nodes (10-16) in a hierarchy of multiple levels (1a-1e), wherein nodes (10-16) on adjacent levels (1a-1e) of the hierarchy have coherency relationships in that the supply and/or demand at a node (10-16) on the higher level (1a-1d) is the aggregate of the supply and/or demand at multiple nodes (10-16) on the lower level (1b-1e), the coherence relationships being dictated by a physical law regarding the physical commodity, the method comprising the steps of:

   • providing (210), for each node (10-16) in the distribution network (1), a time series (20-26) of supply and/or demand values for a plurality of past time steps;
   • splitting (220) the time series (20-26) into a training part (20a-26a) and a test part (20b-26b);
   • providing (230) the training part (20a-26a) of each time series (20-26) to the machine learning model (3), thereby obtaining predicted supply and/or demand values (40-46) for time steps that relate to the test part (20b-26b);
   • rating (240), by means of a predetermined loss function (6),
   ∘ deviations of the predicted supply and/or demand values (40-46) from the supply and/or demand values (20-26) in the test part (20b-26b), and
   ∘ how well, in view of the predicted supply and/or demand values (40-46), the coherency relationships between nodes are met with respect to the time steps that relate to the test part (20b-26b); and
   • optimizing (250) parameters (3a) that characterize the behavior of the machine learning model (3) towards the goal that a further processing of training parts improves the rating (6a) by the loss function (6).

2. The method (200) of claim 1, wherein the determining of how well the coherency relationships are met comprises:

   • determining (241), from predicted supply and/or demand values (40-46), according to the coherency relationships, aggregated values (40#-46#); and
   • comparing (242) these aggregated values (40#-46#) to predicted supply and/or demand values (40-46) for the respective nodes (10-16).

3. The method (200) of claim 2, wherein the aggregating is performed (241a) over at least one predetermined number k of hops in the hierarchy.

4. The method (200) of claim 3, wherein

   • the aggregating is performed (241b) for multiple numbers k of hops; and
   • a weighted average of the respective results of the aggregating is computed (241c).

5. The method (200) of claim 4, wherein the weights for the average are optimized (251) together with the parameters (3a) of the machine learning model.

6. The method (200) of any one of claims 1 to 5, further comprising:

   • when splitting (220) the time series, splitting off (221) a validation part (20c-26c) as well; and
   • rating (260), using the validation part (20c-26c), the performance (3b) of the trained machine learning model (3*) based on at least one performance metric (7).

7. The method (200) of claim 6, wherein the performance metric comprises one or more of:

   • a deviation of predicted supply and/or demand values (40-46) from values (20-26) in the validation part (20c-26c);
   • a measure for the meeting of the coherency relationships over one or more hops in the hierarchy;
   • an accuracy of predicted supply and/or demand values (40-46); and
   • a coefficient of determination of predicted supply and/or demand values (40-46).

8. A method (100) for predicting the supply and/or demand (2) of a physical commodity in a distribution network (1) comprising a plurality of nodes (10-16) in a hierarchy of multiple levels (1a-1e), wherein nodes (10-16) on adjacent levels (1a-1e) of the hierarchy have coherency relationships in that the supply and/or demand at a node (10-16) on the higher level (1a-1d) is the aggregate of the supply and/or demand at multiple nodes (10-16) on the lower level (1b-1e), the method (100) comprising the steps of:

   • providing (110), by training with the method (200) of any one of claims 1 to 7, at least one machine learning model (3) that is trained to predict, based on a time series (2) of supply and/or demand values for a plurality of past time steps, a supply and/or demand value (4) for at least one future time step; and
   • for each node (10-16), providing (120) a respective past time series (20-26) of supply and/or demand values to the at least one machine learning model (3), thereby predicting at least one respective future supply and/or demand value (40-46).

9. The method (100) of claim 8, further comprising: evaluating (130), based at least in part on the predicted supply and/or demand values (40-46), a figure of merit (5) for operation of the distribution network (1).

10. The method (100) of claim 9, wherein the figure of merit (5) is based (131) at least in part on whether the physical links (E1-E6) between nodes (10-16) can support the traffic of the physical commodity that corresponds to the supply and/or demand values (20-26, 40-46) at all nodes (10-16).

11. The method (100) of any one of claims 9 to 10, further comprising: optimizing (140) the hierarchy, and/or operating parameters, and/or an operating schedule, of the distribution network (1) with the goal of improving the figure of merit (5).

12. The method (100) of claim 11, wherein

    • the physical commodity comprises traffic participants in a road network;
    • the nodes (10-16) correspond to junctions in the road network; and
    • a schedule for one or more traffic lights is optimized as the operating schedule.

13. The method (100) of any one of claims 8 to 11, wherein the physical commodity comprises one or more of: a solid, a liquid, and electricity.

14. A computer program, comprising machine-readable instructions that, when executed by one or more computers and/or compute instances, cause the one or more computers and/or compute instances to perform a method (100, 200) of any one of claims 1 to 13.

15. A non-transitory machine-readable data carrier and/or a download product with the computer program of claim 14.

16. One or more computers and/or compute instances with the computer program of claim 14, and/or with the machine-readable data carrier and/or download product of claim 15.

EP 4 456 365 A1

Fig. 1

12

Fig. 2

EP 4 456 365 A1

**Fig. 3**

Fig. 4

# EUROPEAN SEARCH REPORT

Application Number

EP 23 17 0799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/273858 A1 (RADOVANOVIC ANA [US] ET AL) 2 September 2021 (2021-09-02) * the whole document * | 1-16 | INV. H02J3/00 G06Q50/06 G05B13/02 G06N20/00 |
| A | HE YUJIANG ET AL: "Forecasting Power Grid States for Regional Energy Markets with Deep Neural Networks", 2020 INTERNATIONAL JOINT CONFERENCE ON NEURAL NETWORKS (IJCNN), IEEE, 19 July 2020 (2020-07-19), pages 1-8, XP033831864, DOI: 10.1109/IJCNN48605.2020.9207536 [retrieved on 2020-09-25] * page 4; figure 4 * | 6 | |
| A | US 2022/368650 A1 (YANG HUI [CN] ET AL) 17 November 2022 (2022-11-17) * the whole document * | 1-14 | |
| A | US 2021/175715 A1 (SHUKLA SRIVATS [US] ET AL) 10 June 2021 (2021-06-10) * claim 1; figures 4a,4b * | 1-14 | TECHNICAL FIELDS SEARCHED (IPC) |
| A | US 2021/184471 A1 (HARPER KARL ERIC [US] ET AL) 17 June 2021 (2021-06-17) * the whole document * | 1-14 | H02J G06Q G05B G06N |

-/--

The present search report has been drawn up for all claims

| Place of search | Date of completion of the search | Examiner |
|---|---|---|
| Munich | 18 October 2023 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 17 0799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Per Øyvind Kanestrøm ET AL: "Traffic flow forecasting with deep learning", , 1 January 2017 (2017-01-01), XP055562264, Norway Retrieved from the Internet: URL:https://www.google.com/url?sa=t&rct=j& q=&esrc=s&source=web&cd=8&ved=2ahUKEwic4qW 56tngAhU_wcQBHTlICa4QFjAHegQICRAC&url=http s://brage.bibsys.no/xmlui/bitstream/handle /11250/2563560/Master_2017_Kanestrom.pdf?s equence=1&isAllowed=y&usg=AOvVaw3n-YJg8SUq 808YoZ7FglwB [retrieved on 2019-02-26] * the whole document * | 12 | |

TECHNICAL FIELDS
SEARCHED (IPC)

The present search report has been drawn up for all claims

| Place of search | Date of completion of the search | Examiner |
|---|---|---|
| Munich | 18 October 2023 | Tchegho Kamdem, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0799

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | Publication date | Patent family member(s) | Publication date |
|---|---|---|---|
| US 2021273858 A1 | 02-09-2021 | US 2021273858 A1 | 02-09-2021 |
| | | WO 2020013884 A1 | 16-01-2020 |
| US 2022368650 A1 | 17-11-2022 | CN 113705959 A | 26-11-2021 |
| | | US 2022368650 A1 | 17-11-2022 |
| US 2021175715 A1 | 10-06-2021 | US 2019288514 A1 | 19-09-2019 |
| | | US 2021175715 A1 | 10-06-2021 |
| | | WO 2019178146 A1 | 19-09-2019 |
| US 2021184471 A1 | 17-06-2021 | CN 112368652 A | 12-02-2021 |
| | | EP 3818418 A1 | 12-05-2021 |
| | | JP 7178478 B2 | 25-11-2022 |
| | | JP 2021529502 A | 28-10-2021 |
| | | US 2021184471 A1 | 17-06-2021 |
| | | WO 2020010326 A1 | 09-01-2020 |

EPO FORM P0459

For more details about this annex : see Official Journal of the European Patent Office, No. 12/82